# EUROPEAN PATENT APPLICATION

(11) **EP 4 704 031 A1**
(43) Date of publication of application: **04.03.2026**
(21) Application number: 25196795.6
(22) Date of filing: 19.08.2025
(51) Int. Cl.: G06T 7/33

(54) **IDENTIFYING AND LOCATING MULTIPLE ALIGNMENT MARKS WITHIN A SINGLE IMAGE**

(30) Priority: 26.08.2024 US 202418815536
(71) Applicant: Applied Materials, Inc., Santa Clara, CA 95054-3299 (US)
(72) Inventor: TSAI, Chi-Ming, Santa Clara, 95054 (US); LAIDIG, Thomas L., Santa Clara, 95054 (US); KEMELDINOV, Aidyn, Santa Clara, 95054 (US); KUO, Shih-Hao, Santa Clara, 95054 (US); LIE, Frederick, Santa Clara, 95054 (US); SUEN, Min-Sheng, Santa Clara, 95054 (US)
(74) Representative: Zimmermann & Partner Patentanwälte mbB

(57) **Abstract**

A system includes a memory and at least one processing device, operatively coupled to the memory, to detect, in an image of a plurality of dies on a substrate, a plurality of alignment marks, wherein each die of the plurality of dies includes at least one alignment mark of the plurality of alignment marks, select an alignment mark from the plurality of alignment marks, determine an identity of the alignment mark, and determine a location of the alignment mark.

## Description

### TECHNICAL FIELD

The instant specification generally relates to electronic device fabrication. More specifically, the instant specification relates to identifying and locating multiple alignment marks of a wafer within a single image.

### BACKGROUND

Electronic packaging and assembly are typically used to link the small dimensions of an integrated circuit (IC) to an interconnecting substrate, for example, a printed circuit board (PCB) or an interposer. The PCB usually includes a number of passive components and ICs to build a microelectronic device, and the interposer is a connection board embedded into a packaged chip with a plurality of chiplet ICs on the interposer. As the semiconductor industry has experienced rapid growth due to ongoing improvements in the integration density of a variety of electronic components, for example, transistors, diodes, resistors, and capacitors. For the most part, improvement in integration density has resulted from iterative reduction of minimum feature size, which allows more components to be integrated into a given area. As the demand for shrinking electronic devices has grown, a need for smaller and more creative packaging techniques of semiconductor dies has emerged.

### SUMMARY

The following is a simplified summary of the disclosure in order to provide a basic understanding of some aspects of the disclosure. This summary is not an extensive overview of the disclosure. It is intended to neither identify key or critical elements of the disclosure, nor delineate any scope of the particular implementations of the disclosure or any scope of the claims. Its sole purpose is to present some concepts of the disclosure in a simplified form as a prelude to the more detailed description that is presented later.

In accordance with an embodiment, a system is provided. The system includes a memory and at least one processing device, operatively coupled to the memory, to detect, in an image of a plurality of dies on a substrate, a plurality of alignment marks, wherein each die of the plurality of dies includes at least one alignment mark of the plurality of alignment marks, select an alignment mark from the plurality of alignment marks, determine an identity of the alignment mark, and determine a location of the alignment mark.

In accordance with another embodiment, a method is provided. The method includes detecting, by at least one processing device in an image of a plurality of dies on a substrate, a plurality of alignment marks, wherein each die of the plurality of dies includes at least one alignment mark of the plurality of alignment marks, selecting, by the at least one processing device, an alignment mark from the plurality of alignment marks, determining, by the at least one processing device, an identity of the alignment mark, and determining, by the at least one processing device, a location of the alignment mark.

In accordance with yet another embodiment, a non-transitory computer-readable storage medium is provided. The non-transitory computer-readable storage medium includes instructions that, when executed by at least one processing device, cause the at least one processing device to perform operations including detecting, in an image of a plurality of dies on a substrate, a plurality of alignment marks, wherein each die of the plurality of dies includes at least one alignment mark of the plurality of alignment marks, selecting an alignment mark from the plurality of alignment marks, determining an identity of the alignment mark, and determining a location of the alignment mark.

### BRIEF DESCRIPTION OF THE DRAWINGS

Aspects and implementations of the present disclosure will be understood more fully from the detailed description given below and from the accompanying drawings, which are intended to illustrate aspects and implementations by way of example and not limitation.
**FIG. 1** is a schematic partial perspective view of a digital lithography system, in accordance with some embodiments.
**FIG. 2** is a block diagram of a digital lithography system, in accordance with some embodiments.
**FIG. 3** is a diagram of a digital lithography system, in accordance with some embodiments.
**FIG. 4** are diagrams illustrating an example of die packages on a substrate, in accordance with some embodiments.
**FIG. 5** is a diagram illustrating an example system for identifying and locating multiple alignment marks within a single image, in accordance with some embodiments.
**FIG. 6** is a diagram illustrating an example implementation of identifying and locating multiple alignment marks within a single image, in accordance with some embodiments.
**FIG. 7** are diagrams of example camera field of views (FOVs) that can be used to identify and locate multiple alignment marks within a single image, in accordance with some embodiments.
**FIGS. 8-9** are diagrams illustrating example implementations of identifying and locating multiple alignment marks within a single image, in accordance with some embodiments.
**FIGS. 10-11** are flowcharts of example methods for identifying and locating multiple alignment marks within a single image, in accordance with some embodiments.
**FIG. 12** is a block diagram illustrating a computer system, according to certain embodiments.

### DETAILED DESCRIPTION

Digital lithography refers to processes that use a virtual mask file to cause electromagnetic radiation, such as laser light, ultraviolet light (UV), near-UV, etc., to expose a photoresist to create patterns on a substrate without requiring the use of a physical mask. Examples of digital lithography include maskless lithography, direct-write lithography, etc. Digital lithography technology enables high speed and high-resolution maskless lithography solutions for printed circuit board (PCB) patterning, solder masks, flat panel displays, laser marking, and other digital exposure systems that benefit from high speed and precision. Digital lithography can be used to directly expose patterns onto photoresist films without the use of contact masks (e.g., photomasks). This can reduce material cost, improves production rates, and allow for rapid changes of the pattern. Direct exposure increases productivity compared to narrow laser beam or masked systems. An advantage of digital lithography is the ability to change lithography patterns from one run to the next, without incurring the cost of generating a new photomask. Illustratively, digital lithography can be used to perform large-area patterning during electronic device fabrication. Some digital lithography systems are implemented using digital micromirror devices (DMDs). A DMD is an electrical input, optical output micro-electrical-mechanical system (MEMS) that can perform spatial light modulation. More specifically, a DMD can include an array of micromirrors ("mirrors") that can be individually tilted to reflect light in different directions. Each mirror can be tilted into two positions: ON (reflecting light) or OFF (deflecting light). Each mirror acts as a pixel, and by rapidly switching mirrors between on and off positions, the DMD can modulate light to create images or patterns. When used with coherent light sources like lasers, the DMD can produce diffraction patterns due to their structure. The arrangement of the mirrors of the DMD can create a blazed grating effect, which can cause incident light to be diffracted into multiple orders. For a coherent light source, the diffraction pattern produced by the DMD can be distributed in a dotted pattern that results from the interference between light reflected from different micromirrors. The color of the dot pattern depends on the wavelength of the light source used. To perform digital lithography (e.g., maskless lithography) with a DMD, the DMD can then project an image (e.g., shape) onto a photoresist on the substrate by controlling a position of each of the mirrors. More specifically, the mirrors in the ON position can reflect the light onto the photoresist, exposing the light to the image at a particular location ("a dose"). The mirrors in the OFF position deflect the light away from the photoresist. The exposed photoresist can be developed to remove either the exposed or unexposed areas, depending on the type of photoresist. The development of the exposed photoresist leaves behind the image on the substrate. Accordingly, by using a combination of mirrors in an ON position and an OFF position, the photoresist can be selectively exposed to light that, when developed, create the image on the substrate. In order to perform digital lithography, a digital image representing the image, having a vector graphics format, can first be converted into a DMD-compatible format, also referred to as an exposure pattern. Converting the digital image into the exposure pattern can include rasterizing the image to generate a raster image having a bitmap format. A bitmap refers to a matrix pattern of pixels (or dots) that represent the original image. For example, the image can be defined by a virtual mask file, such as a GDSII stream format ("GDS") file, where GDS stands for Graphic Design System. GDS is a binary database file format that can represent planar geometric shapes, text labels, and other information about the layout in hierarchical form.

In-line metrology refers to the process of measuring and inspecting products or components directly within the production line or manufacturing process, without interrupting the workflow and/or minimizing the need to remove items for inspection. In-line metrology allows for real-time quality control, process monitoring, and immediate feedback for adjustments. Measurements can be taken continuously or at regular intervals during production, enabling early detection of issues or deviations. Many in-line metrology systems are automated, reducing human error and increasing efficiency.

An alignment mark on a component of a substrate, also referred to as a fiducial mark, is a mark used to precisely position and orient the component during various stages of the manufacturing process, such as during lithography. For example, the substrate can be a wafer. Alignment marks can include raised structural elements or patterns on the surface of the wafer that can be arranged in specific configurations, such as parallel lines or symmetrical groups. Examples of alignment marks include cross alignment marks formed by intersecting lines, box-in-box alignment marks (i.e., a smaller box within a larger box), custom marks (e.g., complex shapes and/or patterns), etc.

Typically, a lithography or metrology tool can identify a single alignment mark within a single image in order to measure the position of the alignment mark during alignment. As the on-wafer density of dies and/or packages continues to increase, the number of alignment marks that are included on an IC will increase. This will cause the lithography or metrology tool to spend more and more time in image capturing and therefore slow down productivity and increase cost of production. Illustratively, there may be 400 packages on a wafer where each package has four corner marks, meaning that there are 1600 total alignment marks having positions to be determined during alignment. Using a typical approach in which each alignment mark is identified within a respective single image, it will take 1600 images to determine the positions of the 1600 alignment marks. If each step takes around 2.2 seconds, then it may take over an hour to process all 1600 alignment marks.

Aspects and implementations of the present disclosure address these and other shortcomings of existing technologies by enabling the identification and location of multiple alignment marks within a single image. Embodiments described herein can be used to determine (e.g., estimate) the positions of multiple alignment marks identified within an image area. The alignment marks can belong to different components of a substrate (e.g., wafer). Examples of components include dies and/or die packages. Embodiments described herein can further categorize and record data identifying associations between the alignment marks and their respective components.

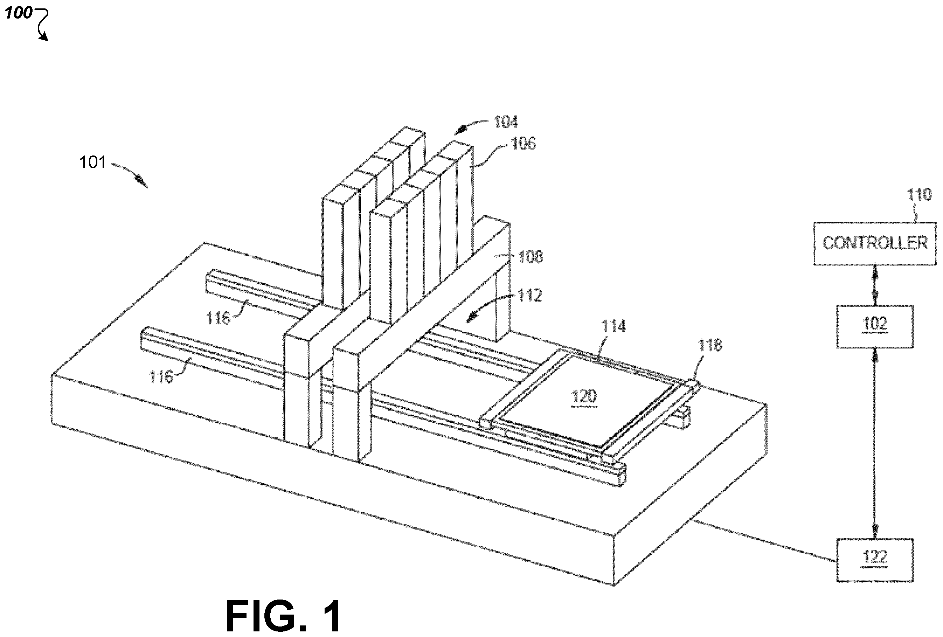

Aspects and implementations of the present disclosure result in technological advantages over other approaches. For example, embodiments described herein can reduce the number of processing resources used during alignment. As another example, embodiments described herein can reduce the amount of time it takes to perform alignment. Illustratively, in the above example of 1600 alignment marks, multiple corner marks can be identified within a single image. For example, the tool can determine the locations of the 1600 alignment marks in 450 images due to some of the images containing multiple marks. In this example, it can take around 17 minutes to process the substrate (e.g., wafer) during alignment, which is about 3.5 times faster than typical implementations. Further details regarding identifying multiple alignment marks of a wafer within a single image will now be described below with reference to **FIGS. 1-12****.**

**FIG. 1** is a schematic partial perspective view of a digital lithography system ("system") 100, in accordance with some embodiments. For example, the system 100 can implement a DMD. The system 100 can include a digital lithography subsystem ("subsystem") 101. The subsystem 101 can include a stage 114 and a processing unit 104. The stage 114 is supported by a pair of tracks 116. A substrate 120 is supported by the stage 114. The stage 114 is operable to move along the pair of tracks 116. The stage 114 can move on the tracks 116 in the x-direction and the y-direction as defined in **FIG. 1****.** The processing unit 104 is configured to expose the photoresist in the digital lithography process using one or more image projection systems (IPSs) 106. The IPSs 106 are supported by supports 108 that are adjacent to (e.g., straddle) the pair of tracks 116. The supports 108 provide an opening 112 for the pair of tracks 116 and the stage 114 to pass under the processing unit 104. The subsystem 101 can further include an encoder coupled to a stage.

The substrate 120 can be formed from any suitable material or combinations of materials, for example, glass, which is used as part of a flat panel display. In other embodiments, which can be combined with other embodiments described herein, the substrate 120 is made of other materials capable of being used as a part of the flat panel display. The substrate 120 has a film layer to be patterned formed thereon, such as by pattern etching thereof, and a photoresist layer formed on the film layer to be patterned, which is sensitive to electromagnetic radiation (e.g., UV). A positive photoresist includes portions of the photoresist, when exposed to radiation, are respectively soluble to a photoresist developer applied to the photoresist after the pattern is written into the photoresist using the electromagnetic radiation. A negative photoresist includes portions of the photoresist, when exposed to radiation, will be respectively insoluble to photoresist developer applied to the photoresist after the pattern is written into the photoresist using the electromagnetic radiation. The chemical composition of the photoresist determines whether the photoresist is a positive photoresist or negative photoresist. Examples of photoresists include, but are not limited to, at least one of diazonaphthoquinone, a phenol formaldehyde resin, poly(methyl methacrylate), poly(methyl glutarimide), and SU-8. After exposure of the photoresist to the electromagnetic radiation, the resist is developed to leave an exposure underlying film layer. Then, using the patterned photoresist, the underlying thin film is pattern etched through the openings in the photoresist to form a portion of the electronic circuitry of the display panel.

The system 100 can further include a lithography controller 122 and a controller 110 communicably coupled to the subsystem 101. For example, the encoder 118 can provide information regarding the location of the stage 114 to the lithography controller 122. The lithography controller 122 is generally designed to facilitate the control and automation of the processing techniques described herein. The lithography controller 122 may be coupled to or in communication with the processing unit 104, the stage 114, and the encoder 118. The processing unit 104 and the encoder 118 may provide information to the lithography controller 122 regarding the substrate processing and the substrate aligning. For example, the processing unit 104 may provide information to the lithography controller 122 to alert the lithography controller 122 that substrate processing has been completed. The controller 110 is operable to deliver one or more virtual mask files corresponding to exposure patterns or the controller 110 is otherwise configured to perform processes described herein. The lithography controller 122 can facilitate the control and automation of a digital lithography process based on a virtual mask file provided by a virtual mask software application 102. The virtual mask file, readable by the lithography controller 122, determines which tasks are to be performed on a substrate. The virtual mask file corresponds to an exposure pattern to be written into the photoresist using the electromagnetic radiation.

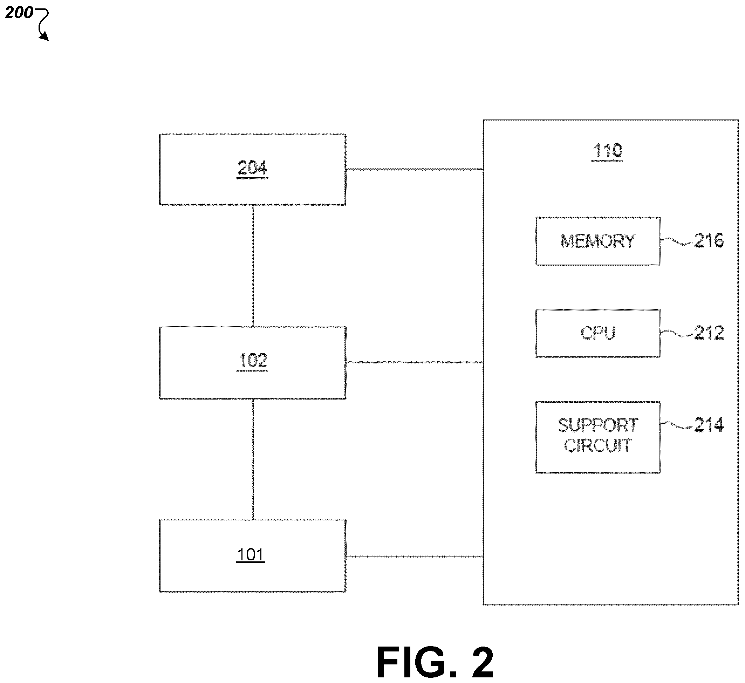

The processing unit 104 can include a pattern generator configured to receive a virtual mask file from the virtual mask software application 102. The virtual mask file can be provided to the processing unit 104 via the lithography controller 122. The processing unit 104 is configured to expose the photoresist in the digital lithography process using the one or IPSs 106. The one or more IPSs 106 are operable to project write beams of electromagnetic radiation to the substrate 120. The exposure pattern generated by the processing unit 104 is projected by the IPSs 106 to expose the photoresist of the substrate 120 to the exposure pattern. The exposure of the photoresist forms one or more different features in the photoresist. In one embodiment, which can be combined with other embodiments described herein, each IPS 106 includes a spatial light modulator to modulate the incoming light to create the desired image. Each spatial light modulator includes a plurality of electrically addressable elements that may be controlled individually. Each electrically addressable element may be in an "ON" position or an "OFF" position based on the digital pattern file 204 (shown in **FIG. 2**). When the light reaches the spatial light modulator, the electrically addressable elements that are in the "ON" position project a plurality of write beams to a projection lens (not shown). The projection lens then projects the write beams to the substrate 120. The electrically addressable elements include, but are not limited to, digital micromirrors, liquid crystal displays (LCDs), liquid crystal over silicon (LCoS) devices, ferroelectric liquid crystal on silicon (FLCoS) devices, microshutters, microLEDs, VCSELs, liquid crystal displays (LCDs), or any solid state emitter of electromagnetic radiation.

**FIG. 2** is a block diagram of a digital lithography system ("system") 200, in accordance with some embodiments. As shown, the system 200 can include the subsystem 101, the virtual mask software application 102 and the controller 110 described above with reference to **FIG. 1****.** The controller 110 is operable to facilitate the transfer of a digital pattern file 204 (e.g., data) provided to the controller 110. The controller 110 is operable to execute a virtual mask software application 102 to convert the digital pattern file 204 into a virtual mask file (not shown) having an exposure pattern readable by the processing unit 104. Each of the lithography environment devices is operable to be connected to each other via the communication links 101. Each of the lithography environment devices is operable to be connected to the controller 110 by the communication links 101. The lithography environment 200 can be located in the same area or production facility, or the each of the lithography environment devices can be located in different areas.

The controller 110 includes a central processing unit (CPU) 212, support circuits 214 and a memory 216. The CPU 212 can be one of any form of computer processor that can be used in an industrial setting for controlling the lithography environment devices. The memory 216 is coupled to the CPU 212. The memory 216 can be one or more of readily available memory, such as random access memory (RAM), read only memory (ROM), floppy disk, hard disk, or any other form of digital storage, local or remote. The support circuits 214 are coupled to the CPU 212 for supporting the processor. For example, the support circuits 214 can include cache, power supplies, clock circuits, input/output circuitry, subsystems, and the like. The CPU 212 can be coupled to input/output (I/O) devices found in the support circuits 214 and the memory 216. The controller 110 is operable to facilitate and transfer the digital pattern file 204 to the digital lithography system 100 via the communication links 101. The digital pattern file 204 is operable to be provided to the virtual mask software application 102 or the digital lithography system 100 via the controller 110.

The memory 216 can include one or more software applications, such as the virtual mask software application 102. The CPU 212 can be a hardware unit or combination of hardware units capable of executing software applications and processing data. In some configurations, the CPU 212 includes a digital signal processor (DSP), an application-specific integrated circuit (ASIC), and/or a combination of such units. The CPU 212 is configured to execute the one or more software applications, such as the virtual mask software application 102 and process the stored media data, which can be each included within the memory 216. The controller 110 controls the transfer of data and files to and from the various lithography environment devices.

The controller 110 is operable to receive exposure patterns of the virtual mask file and transfer the exposure patterns to the digital lithography system 100 via the communication links 101. The virtual mask file (or computer instructions), which may be referred to as an imaging design file, readable by the controller 110, determines which tasks are performable on a substrate. While the virtual mask software application 102 is illustrated as separate from the controller 110 (e.g., in the cloud), it is contemplated that the virtual mask software application 102 may be stored locally (e.g., in memory 216).

The virtual mask file corresponds to a pattern to be written into the photoresist using electromagnetic radiation output by the digital lithography system 100. In one embodiment, which can be combined with other embodiments described herein, the pattern may be formed with one or more patterning devices. For example, the one or more patterning devices are configured to perform ion-beam etching, reactive ion etching, electron-beam (e-beam) etching, wet etching, nanoimprint lithography (NIL), and combinations thereof. The virtual mask file may be provided in different formats. For example, the format of the virtual mask file may be one of a GDS format, and an OASIS format, among others. The virtual mask file includes information corresponding to features of exposure patterns to be generated on a substrate (e.g., the substrate 120). The virtual mask file may include areas of interest which correspond to one or more structural elements. The structural elements may be constructed as geometrical shapes (e.g., polygons).

The lithography model can be a physics based model. For example, the lithography model can use either a scalar or vector imaging model. In some embodiments, the lithography model utilizes a matrix defined by optical properties and/or photoresist properties. For example, the matrix can include Transmission Cross Coefficients (TCC). In some embodiments, other numerical simulation techniques such as Resolution Enhancement Technology (RET), Optical Proximity Correction (OPC), and Source Mask Optimization (SMO) may be utilized. However, all such models and modeling techniques, whether now known or later developed, are intended to be within the scope of the present disclosure. The lithography model can be constructed to be defined based on optical properties (e.g., optical properties relating to the digital lithography system 100) and the photoresist properties (e.g., properties of the photoresist of which the pattern will be printed on such as materials and processing characteristics of the photoresist). The photoresist properties include numerical aperture, exposure, illumination type, size of illumination, and wavelength, and may include other values.

Once the lithography model is constructed, the virtual mask file can be provided as input to the lithography model. The lithography model can then outputs a prediction of the aerial image and resist profile of the virtual mask file. Through post-processing operations, the ILS and depth of focus of features formed in a photoresist of a substrate based on the virtual mask file may be determined. The lithography model will utilize numerical calculations to predict variables to achieve the maximum ILS and depth of focus (or a maximum ILS and depth of focus within other predefined constraints). The variables include a width and position and a pattern bias value of the exposure patterns. The numerical calculations may be iterative methods, level-set methods, or any other numerical methods operable to solve the lithography model.

The controller 110 provides the digital pattern file 204 to the virtual mask software application 102. The virtual mask software application 102 is operable to receive the digital pattern file 204 via the communication links 101. The virtual mask software application 102 can be a vMASC software. In one embodiment, which can be combined with other embodiments described herein, the virtual mask software application 102 is a software program stored in the memory 216 of the controller 110. The CPU 212 is configured to execute the software program. In another embodiment, which can be combined with other embodiments described herein, the virtual mask software application 102 may be a remote computer server which includes a controller and a memory (e.g., data store).

The digital pattern file 204 can be converted into one or more virtual mask files by the virtual mask software application 102. For example, a first virtual mask file may correspond to an exposure pattern and a second virtual mask file may correspond to another exposure pattern. The virtual mask file is a digital representation of the design to be printed by the digital lithography system 100. The virtual mask file is provided to the digital lithography system 100 via the communication links 101. The virtual mask file is stored in the digital lithography system 100.

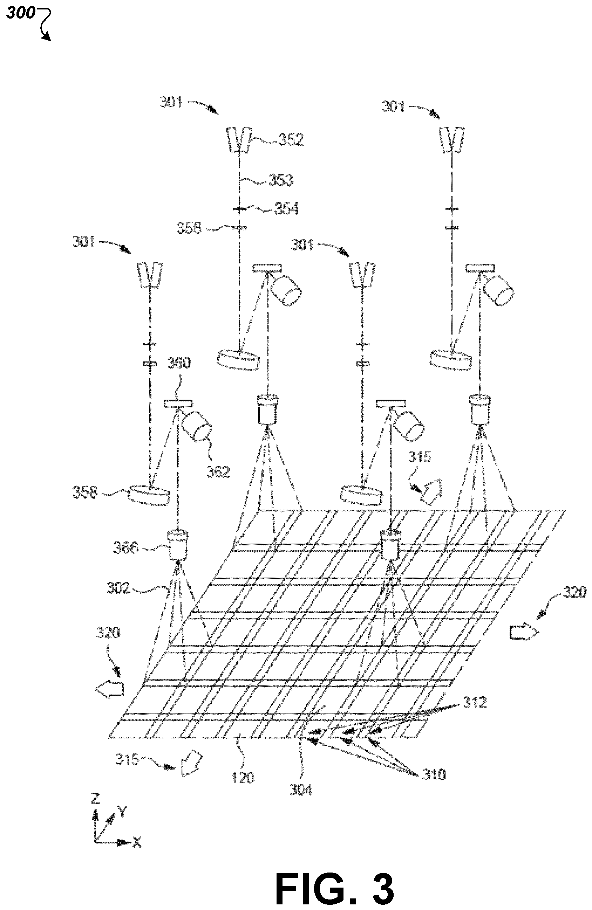

**FIG. 3** is a diagram of a system 300 including multiple IPSs 301, in accordance with some embodiments. As shown in Figure 3, each of the IPSs 301 can generate write beams 302 onto a surface 304 of the substrate 120, corresponding to a plurality of processing positions 312, along a plurality of tracks 116, each of the tracks 116 to be scanned by one or more of the write beams 302. The movement of the substrate 120 is in an in-scan direction indicated by arrow 315, while the cross-scan direction is indicated by arrow 320. As the substrate 120 moves in the in-scan direction and cross-scan direction, the entire surface 304 may be patterned by the write beams 302. The number of the IPSs 301 may vary based on the size of the substrate 120 and/or the speed of stage 114. In one embodiment, there are 10 IPSs 301 in the processing unit 104.

Each of the IPSs 301 can include a light source 352, an aperture 354, a lens 356, a frustrated prism assembly 358, a spatial light modulator (SLM) 360 and a projection optical device 366. The components of each of the plurality of IPSs 301 vary depending on the SLM 360 being used. Each SLM 360 includes, but is not limited to, an array of microLED's, VCSEL's, liquid crystal displays (LCDs), or any solid-state emitter of electromagnetic radiation, and a digital mirror device (DMD). Each SLM 360 can include a plurality of SLM pixels. Each SLM pixel can be individually controllable to project a write beam. The compilation of plurality of SLM pixels forms the pattern written into the photoresist, referred to herein as the mask pattern. Each projection optics 366 includes projection lenses, for example, 10x objective lenses, used to project light onto the substrate 120. In operation, based on the mask pattern data provided to the SLM 360 by the controller 110, each SLM pixel is at an "ON" position or "OFF" position. Each SLM pixel at an "ON" position forms a write beam that the corresponding projection optical device 366 then projects the write beam to the photoresist layer surface of the substrate 120 to form a pixel of the mask pattern. In some embodiments, each SLM 360 includes a plurality of mirrors, e.g., the plurality of SLM pixels. Each mirror of the plurality of mirrors corresponds to an SLM pixel that may correspond to a pixel of the mask pattern. In some embodiments, an SLM 360 is a DMD. In some embodiments, the DMD includes more than about 4,000,000 mirrors, while in other embodiments may include 1920x1080 mirrors, which represent the number of pixels of a high definition television.

The light source 352 is any suitable light source, such as a light emitting diode (LED) or a laser, capable of producing a light having a predetermined wavelength. In one embodiment, the predetermined wavelength is in the blue or near UV range, such as less than about 450 nm. The frustrated prism assembly 358 includes a plurality of reflective surfaces. In operation, a light beam 453 having is produced by the light source 352. The light beam 353 is reflected SLM 360 by the frustrated prism assembly 358. When the light beam 353 reaches the mirrors of the SLM 360, each mirror at the "ON" position reflects the light beam 353 to the projection optical system 366. The projection optical system 366 then projects a plurality of write beams (e.g., "shots") 302 onto the photoresist layer of the substrate 120. The plurality of write beams 302 forms a plurality of pixels of the mask pattern.

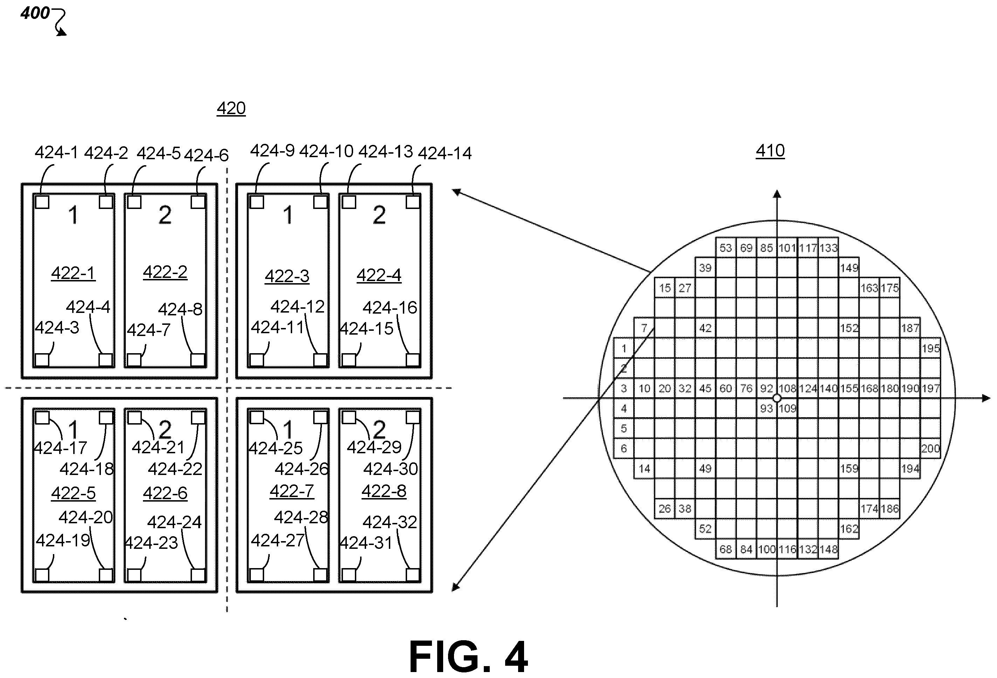

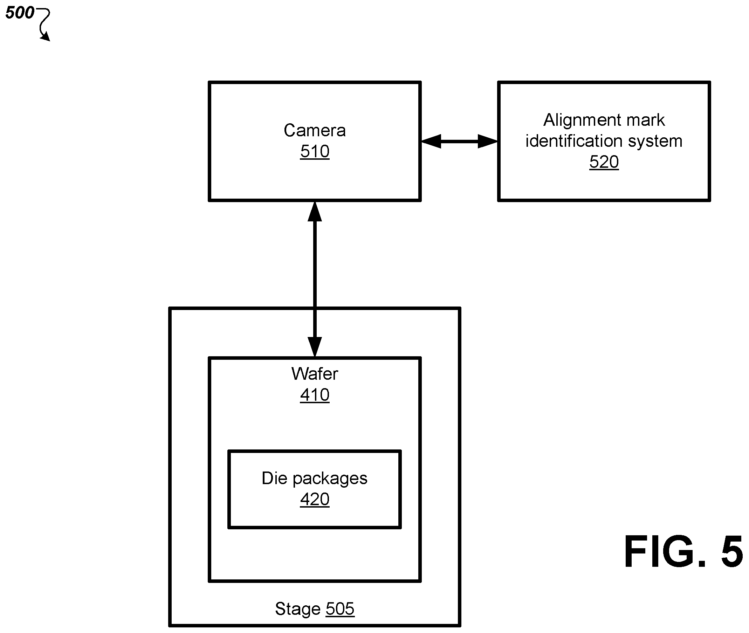

**FIG. 4** are diagrams 400 illustrating an example substrate (e.g., wafer) 410 and a set of die packages 420 on the substrate 410, in accordance with some embodiments. In this illustrative example, each die package of the set of die packages 420 includes a pair of dies. For example, the set of die packages 420 can include a first die package including a die 422-1 and a die 422-2, a second die package including a die 422-3 and a die 422-4, a third die package including a die 422-5 and a die 422-6, and a fourth die package including a die 422-7 and a die 422-8. As further shown in **FIG. 4****,** each of the dies 422-1 through 422-8 includes a plurality of alignment marks. More specifically, in this example, each alignment mark of a die is a corner mark formed about a respective corner of the die. For example, the die 422-1 includes alignment marks 424-1 through 424-4, the die 422-2 includes alignment marks 424-5 through 424-8, the die 422-3 includes alignment marks 424-9 through 424-12, the die 422-4 includes alignment marks 424-13 through 424-16, the die 422-5 includes alignment marks 424-17 through 424-20, the die 422-6 includes alignment marks 424-21 through 424-24, the die 422-7 includes alignment marks 424-25 through 424-28, and the die 422-8 includes alignment marks 424-29 through 424-32. As will now be described in further detail below with reference to **FIGS. 5-11****,**

**FIG. 5** is a diagram illustrating an example system 500, in accordance with some embodiments. As shown in **FIG. 5****,** the system 500 can include the substrate 410 including the set of die packages 420, as described above with reference to **FIG. 4****.** The substrate 410 can be on a stage. The system 500 can further include a camera 510 operatively coupled to an alignment mark identification system 520. The camera 510 can obtain (e.g., capture) an image of the set of die packages 420, and the alignment mark identification system 520 can identify multiple alignment marks of the set of die packages 420 within the image.

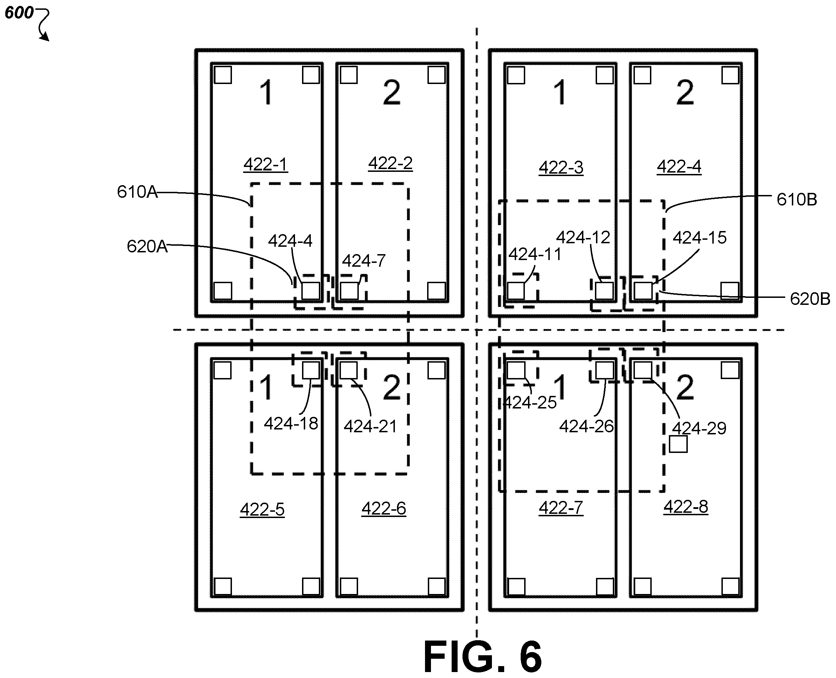

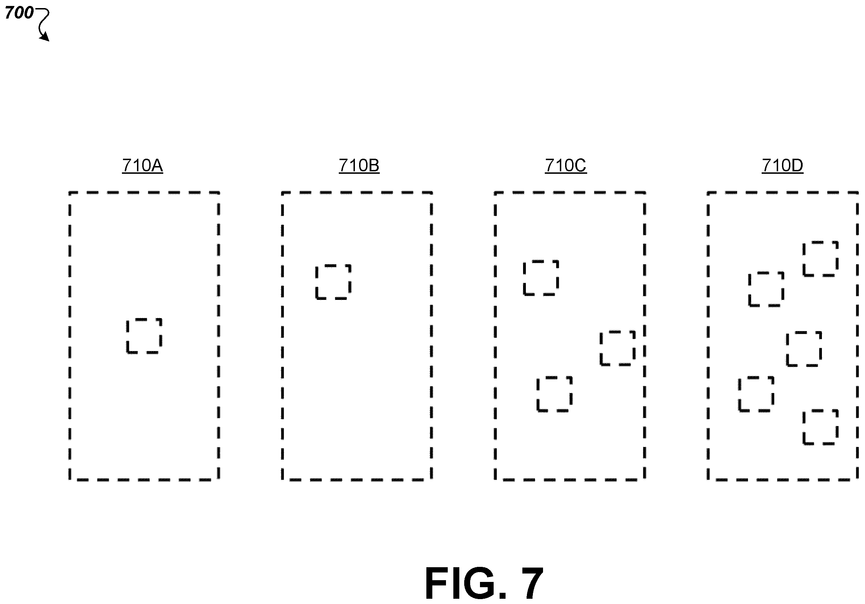

**FIG. 6** is a diagram 600 illustrating an example implementation of identifying and locating multiple alignment marks within a single image, in accordance with some embodiments. As shown in **FIG. 6****,** a camera (e.g., the camera 510 of **FIG. 5**) has a camera FOV 610A including a first set of image areas including image area 620A, and a camera FOV 610B including a second set of image areas including image area 620B. In this illustrative example, there are four image areas of the first set of image areas, and six image areas of the second set of image areas. Each image area corresponds to the location of an alignment mark of a die (e.g., a corner of the die). For example, the image area 620A corresponds to the location of the alignment mark 424-4 of the die 422-1, and the image area 620B corresponds to the location of the alignment mark 424-15 of the die 422-4. An alignment mark identification system (e.g., the alignment mark identification system 520 of **FIG. 5**) can identify multiple alignment marks corresponding to the image areas within the camera FOV 610A and/or the camera FOV 610B. As will be described in further detail below with reference to **FIG. 7****,** at least one property of the camera FOV 610 can be adjusted (e.g., dynamically adjusted) based on the production request. Examples of properties of the camera FOV 610 include the number of alignment marks within the camera FOV 610, the positioning of the image areas 620 of the camera FOV 610, etc. In this illustrative example, the alignment marks have a square shape. However, the shape of the alignment marks described herein should not be considered limiting.

**FIG. 7** are diagrams 700 of example camera FOVs, in accordance with some embodiments. For example, diagram 710A is a camera FOV including a single image area within a center of the camera FOV. Diagram 720A is a camera FOV including a single off-center image area. Diagram 730A is a camera FOV including three image areas. Diagram 740A is a camera FOV including five image areas. The number and/or position of image areas should not be considered limiting.

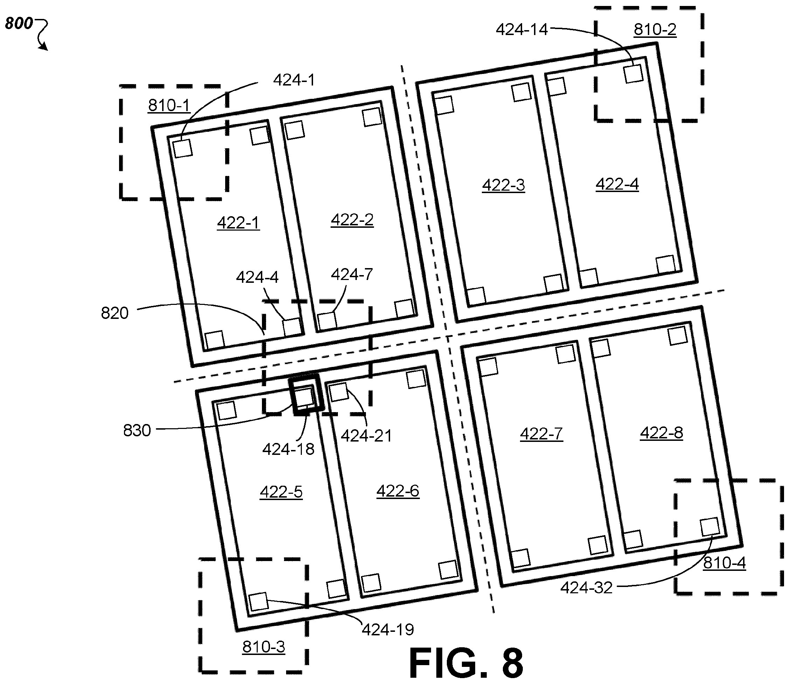

**FIG. 8** is a diagram 800 illustrating an example implementation of identifying and locating multiple alignment marks within a single image, in accordance with some embodiments. More specifically, the diagram 800 illustrates an image cropping approach to identifying and locating the multiple alignment marks. In some embodiments, and as shown, the substrate 410 is rotated by some angle.

As shown in **FIG. 8****,** an alignment mark identification system (e.g., the alignment mark identification system 520 of **FIG. 5**) can identify a first set of alignment marks from the substrate 410. The first set of alignment marks can include one or more "unambiguous marks" that can be used to generate a model of the substrate 410. More specifically, the first set of alignment marks can be identified from a set of images taken by a camera (e.g., the camera 510 of **FIG. 5**). The first set of alignment marks can include one or more alignment marks that are singly depicted in one or more respective image areas. In this illustrative example, the first set of alignment marks includes the alignment mark 424-1 depicted within the image area 810-1, the alignment mark 424-14 depicted within the image area 810-1, the alignment mark 424-19 identified within the image area 810-3, and the alignment mark 424-32 depicted within the image area 810-4.

The alignment mark identification system can then generate, using the first set of alignment marks, the model of the substrate 410. For example, generating the model can include identifying a position of the wafer (e.g., shift and/or rotation).

The alignment mark identification system can then obtain an image of a second set of alignment marks within a selected image area. In this illustrative example, the second set of alignment marks includes alignment marks 424-4, 424-7, 424-18 and 424-21, and the selected image area is the image area 820.

The alignment mark identification system can then select an alignment mark from the second set of alignment marks within the second image area, and determine (e.g., estimate) the location of the selected alignment mark. For example, the location of the selected alignment mark can be determined based on the model and a location of the alignment mark as illustrated in a design file. In this illustrative example, the selected alignment mark is the alignment mark 424-18 as indicated by box 830. In some embodiments, the location of the selected alignment mark is determined based on an average distance (e.g., weighted average distance) with respect to the first set of alignment marks (e.g., the set of unambiguous alignment marks). The alignment mark identification system can then modify the image to reduce ambiguity. For example, modifying the image can include cropping out the portion of the image outside of the box 830. The alignment mark identification system can then align the selected alignment mark to the model based on the modified image. In some embodiments, aligning the selected alignment mark includes performing pattern matching using the selected alignment mark. A similar process can be performed for each alignment mark of the second set of alignment marks.

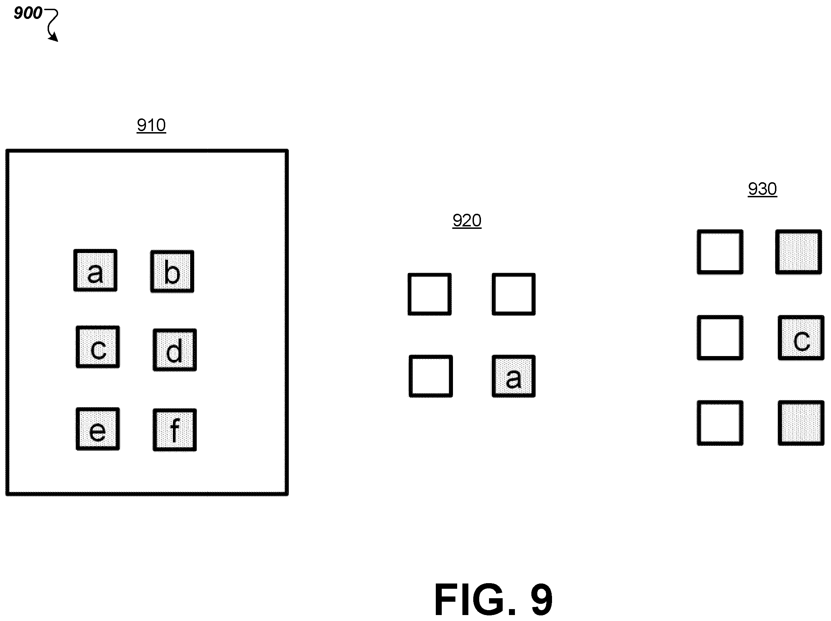

**FIG. 9** is a diagram 900 illustrating an example implementation of identifying and locating multiple alignment marks within a single image, in accordance with some embodiments. More specifically, the diagram 900 illustrates a rule-based approach to identifying and locating the multiple alignment marks. As shown in **FIG. 9****,** a set of alignment marks 910 can include alignment marks "a", "b", "c", "d", "e" and "f". Each alignment mark can be uniquely identified by a particular rule. For example, as shown in diagram 920, alignment mark "a" can be identified as the alignment mark of the set of alignment marks 910 in which there are no alignment marks located to the left of the alignment mark, above the alignment mark and at the upper left diagonal of the alignment mark. As another example, as shown in diagram 930, the alignment mark "c" can be identified as the alignment mark of the set of alignment marks 910 in which there are alignment marks above and below the mark, and there are no alignment marks to the left side of the alignment mark (e.g., the left, the upper left diagonal and the lower left diagonal.) These rules are provided as examples, and other rules are contemplated.

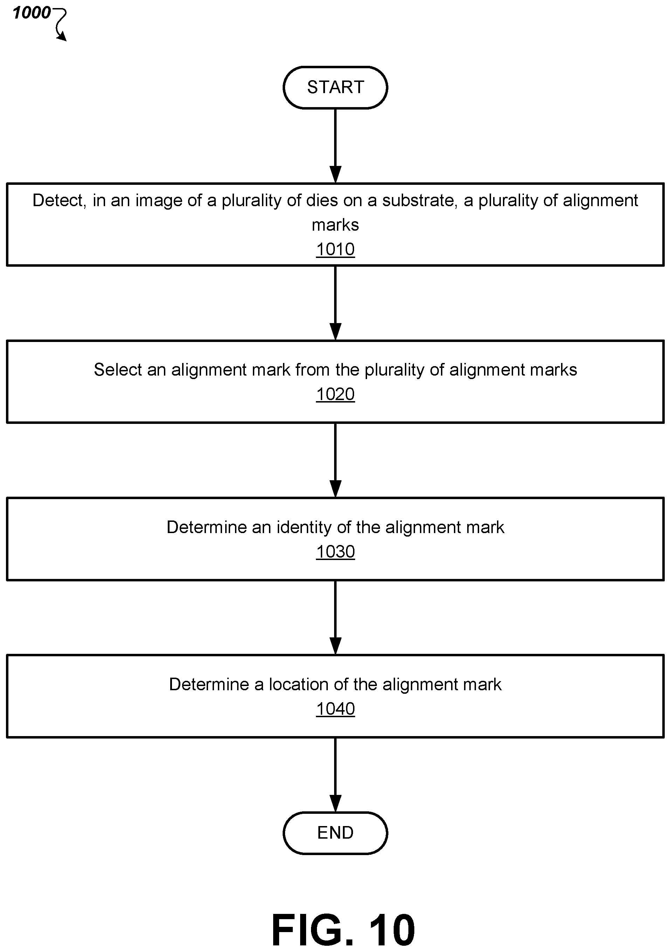

**FIG. 10** depicts a flow diagram of an example method 1000 for identifying and locating multiple alignment marks within a single image, in accordance with some embodiments. The method 1000 may be performed by processing logic that may comprise hardware (circuitry, dedicated logic, etc.), computer readable instructions (run on a general purpose computer system or a dedicated machine), or a combination of both. In an illustrative example, the method 1000 may be performed by at least one processing device (e.g., of a digital lithography system). It should be noted that operations depicted in **FIG. 10** could be performed simultaneously or in a different order than that depicted.

At operation 1010, processing logic detects, in an image of a plurality of dies on a substrate, a plurality of alignment marks. In some embodiments, the substrate includes a wafer. For example, the substrate can include a set of die packages, where each die package of the set of die packages includes multiple dies (e.g., a pair of dies), and each die includes at least one alignment mark. The at least one image can be obtained by a camera, and the plurality of alignment marks can be grouped within an image area of the camera.

At operation 1020, processing logic selects an alignment mark from the plurality of alignment marks, at operation 1030, processing logic determines an identify of the alignment mark and, at operation 1040, processing logic determines a location of the alignment mark. Operations 1020-1040 can be repeated for each alignment mark of the plurality of alignment marks.

In some embodiments, and as described above with reference to **FIG. 9****,** the method 1000 is performed using a rule-based approach in which the selected alignment mark can have a location defined by a rule. For example, determining the identity of the alignment mark and/or the location of the alignment mark can include determining, from a plurality of rules, a rule satisfied by the alignment mark. Each respective alignment mark of the plurality of alignment marks can satisfy a respective single rule of the plurality of rules corresponding to a respective identity of the respective alignment mark. In some embodiments, each rule of the plurality of rules is defined by at least one of: a presence of one or more other alignment marks at one or more first locations relative to the alignment mark, or an absence of one or more other alignment marks at one or more second locations relative to the alignment mark.

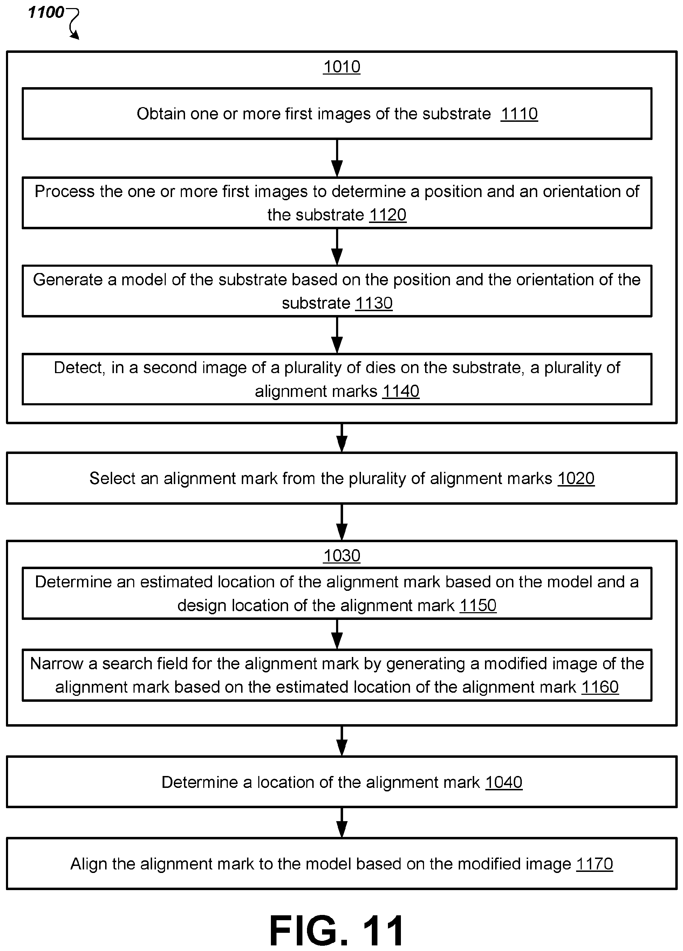

In some embodiments, and as described above with reference to **FIG. 8** and as will be described below with reference to **FIG. 11****,** the method 1000 is performed using an image cropping approach.

**FIG. 11** depicts a flow diagram of an example method 1100 for identifying and locating multiple alignment marks within a single image, in accordance with some embodiments. The method 1100 may be performed by processing logic that may comprise hardware (circuitry, dedicated logic, etc.), computer readable instructions (run on a general purpose computer system or a dedicated machine), or a combination of both. In an illustrative example, the method 1100 may be performed by at least one processing device (e.g., of a digital lithography system). It should be noted that operations depicted in **FIG. 11** could be performed simultaneously or in a different order than that depicted.

The method 1100 can include operations 1010-1040, as described above with reference to **FIG. 10****.**

As shown in **FIG. 11****,** detecting the plurality of alignment marks at operation 1010 can include obtaining one or more first images of the substrate at operation 1110. For example, each image of the one or more first images can include a respective single alignment mark.

Detecting the plurality of alignment marks at operation 1010 can include processing the one or more first images to determine a position and an orientation of the substrate at operation 1120. More specifically, the position and the orientation of the substrate can be determined based on each respective single alignment mark.

Detecting the plurality of alignment marks at operation 1010 can include generating a model of the substrate based on the position and the orientation of the substrate at operation 1130.

Determining the identity of the alignment mark at operation 1030 and/or determining the location of the alignment mark at operation 1040 can include determining an estimated location of the alignment mark (selected at operation 1020) based on the model and a design location of the alignment mark at operation 1150. More specifically, the design location can correspond to a design file of the substrate.

Determining the identity of the alignment mark at operation 1030 and/or determining the location of the alignment mark at operation 1040 can include narrowing a search field for the alignment mark by generating a modified image of the alignment mark based on the estimated location of the alignment mark at operation 1160. More specifically, other alignment marks of the plurality of alignment marks may not be included in the modified image.

At operation 1170, processing logic can align the alignment mark to the model based on the modified image.

Further details regarding operations 1010-1040 and 1110-1170 are described above with reference to **FIGS. 1-10****.**

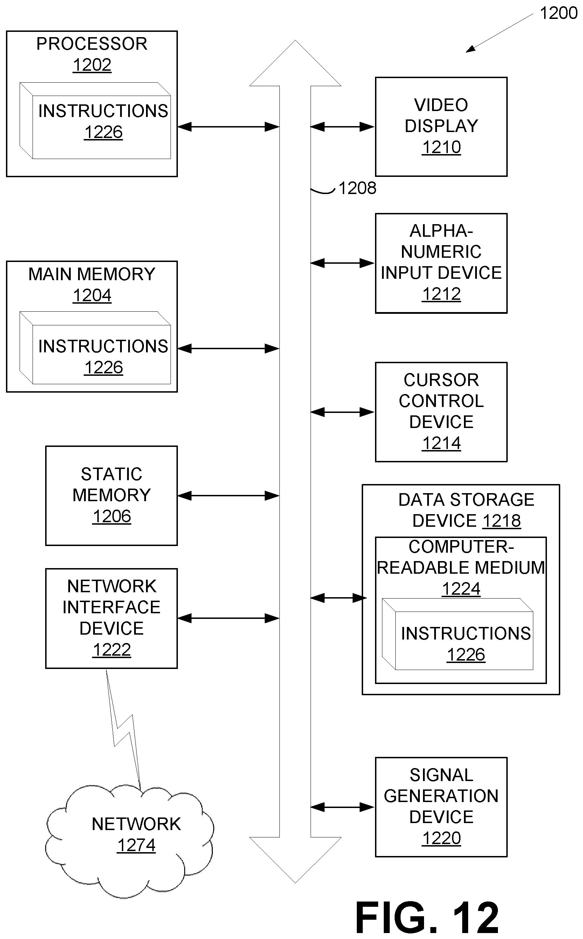

**FIG. 12** is a block diagram illustrating a computer system 1200, according to certain embodiments. In some embodiments, computer system 1200 is connected (e.g., via a network 1274, such as a Local Area Network (LAN), an intranet, an extranet, or the Internet) to other computer systems. In some embodiments, computer system 1200 operates in the capacity of a server or a client computer in a client-server environment, or as a peer computer in a peer-to-peer or distributed network environment. In some embodiments, computer system 1200 is provided by a personal computer (PC), a tablet PC, a Set-Top Box (STB), a Personal Digital Assistant (PDA), a cellular telephone, a web appliance, a server, a network router, switch or bridge, or any device capable of executing a set of instructions (sequential or otherwise) that specify actions to be taken by that device. Further, the term "computer" shall include any collection of computers that individually or jointly execute a set (or multiple sets) of instructions to perform any one or more of the methods described herein.

In a further aspect, the computer system 1200 includes a processing device 1202, a volatile memory 1204 (e.g., Random Access Memory (RAM)), a non-volatile memory 1206 (e.g., Read-Only Memory (ROM) or Electrically-Erasable Programmable ROM (EEPROM)), and a data storage device 1216, which communicate with each other via a bus 1208.

In some embodiments, processing device 1202 is provided by one or more processors such as a general purpose processor (such as, for example, a Complex Instruction Set Computing (CISC) microprocessor, a Reduced Instruction Set Computing (RISC) microprocessor, a Very Long Instruction Word (VLIW) microprocessor, a microprocessor implementing other types of instruction sets, or a microprocessor implementing a combination of types of instruction sets) or a specialized processor (such as, for example, an Application Specific Integrated Circuit (ASIC), a Field Programmable Gate Array (FPGA), a Digital Signal Processor (DSP), or a network processor).

In some embodiments, computer system 1200 further includes a network interface device 1222 (e.g., coupled to network 1274). In some embodiments, computer system 1200 also includes a video display unit 1210 (e.g., an LCD), an alphanumeric input device 1212 (e.g., a keyboard), a cursor control device 1214 (e.g., a mouse), and a signal generation device 1220.

In some implementations, data storage device 1216 includes a non-transitory computer-readable storage medium 1224 on which store instructions 1226 encoding any one or more of the methods or functions described herein. For example, the instructions 1226 can include instructions for controlling the movement of the stage and/or exposure units of a digital lithography system, which, when executed, can implement the methods for performing exposure unit boundary smoothing described herein.

In some embodiments, instructions 1226 also reside, completely or partially, within volatile memory 1204 and/or within processing device 1202 during execution thereof by computer system 1200, hence, in some embodiments, volatile memory 1204 and processing device 1202 also constitute machine-readable storage media.

While computer-readable storage medium 1224 is shown in the illustrative examples as a single medium, the term "computer-readable storage medium" shall include a single medium or multiple media (e.g., a centralized or distributed database, and/or associated caches and servers) that store the one or more sets of executable instructions. The term "computer-readable storage medium" shall also include any tangible medium that is capable of storing or encoding a set of instructions for execution by a computer that cause the computer to perform any one or more of the methods described herein. The term "computer-readable storage medium" shall include, but not be limited to, solid-state memories, optical media, and magnetic media.

In some embodiments, the methods, components, and features described herein are implemented by discrete hardware components or are integrated in the functionality of other hardware components such as ASICS, FPGAs, DSPs or similar devices. In some embodiments, the methods, components, and features are implemented by firmware modules or functional circuitry within hardware devices. In some embodiments, the methods, components, and features are implemented in any combination of hardware devices and computer program components, or in computer programs.

Unless specifically stated otherwise, terms such as "receiving," "initiating," "performing," or the like, refer to actions and processes performed or implemented by computer systems that manipulates and transforms data represented as physical (electronic) quantities within the computer system registers and memories into other data similarly represented as physical quantities within the computer system memories or registers or other such information storage, transmission or display devices. In some embodiments, the terms "first," "second," "third," "fourth," etc. as used herein are meant as labels to distinguish among different elements and do not have an ordinal meaning according to their numerical designation.

Examples described herein also relate to an apparatus for performing the methods described herein. In some embodiments, this apparatus is specially constructed for performing the methods described herein, or includes a general purpose computer system selectively programmed by a computer program stored in the computer system. Such a computer program is stored in a computer-readable tangible storage medium.

The methods and illustrative examples described herein are not inherently related to any particular computer or other apparatus. In some embodiments, various general purpose systems are used in accordance with the teachings described herein. In some embodiments, a more specialized apparatus is constructed to perform methods described herein and/or each of their individual functions, routines, subroutines, or operations. Examples of the structure for a variety of these systems are set forth in the description above.

The preceding description sets forth numerous specific details such as examples of specific systems, components, methods, and so forth, in order to provide a good understanding of several embodiments of the present invention. It will be apparent to one skilled in the art, however, that at least some embodiments of the present invention may be practiced without these specific details. In other instances, well-known components or methods are not described in detail or are presented in simple block diagram format in order to avoid unnecessarily obscuring the present invention. Thus, the specific details set forth are merely exemplary. Particular implementations may vary from these exemplary details and still be contemplated to be within the scope of the present invention.

Reference throughout this specification to "one embodiment" or "an embodiment" means that a particular feature, structure, or characteristic described in connection with the embodiment is included in at least one embodiment. Thus, the appearances of the phrase "in one embodiment" or "in an embodiment" in various places throughout this specification are not necessarily all referring to the same embodiment. In addition, the term "or" is intended to mean an inclusive "or" rather than an exclusive "or." When the term "about" or "approximately" is used herein, this is intended to mean that the nominal value presented is precise within ±10%.

Although the operations of the methods herein are shown and described in a particular order, the order of the operations of each method may be altered so that certain operations may be performed in an inverse order or so that certain operation may be performed, at least in part, concurrently with other operations. In another embodiment, instructions or suboperations of distinct operations may be in an intermittent and/or alternating manner.

It is to be understood that the above description is intended to be illustrative, and not restrictive. Many other implementation examples will be apparent to those of skill in the art upon reading and understanding the above description. Although the present disclosure describes specific examples, it will be recognized that the systems and methods of the present disclosure are not limited to the examples described herein, but may be practiced with modifications within the scope of the appended claims. Accordingly, the specification and drawings are to be regarded in an illustrative sense rather than a restrictive sense. The scope of the present disclosure should, therefore, be determined with reference to the appended claims, along with the full scope of equivalents to which such claims are entitled.

## Claims

1. A method comprising:
detecting, by at least one processing device in an image of a plurality of dies on a substrate, a plurality of alignment marks, wherein each die of the plurality of dies comprises at least one alignment mark of the plurality of alignment marks;
selecting, by the at least one processing device, an alignment mark from the plurality of alignment marks;
determining, by the at least one processing device, an identity of the alignment mark; and
determining, by the at least one processing device, a location of the alignment mark.

2. The method of claim 1, wherein the plurality of dies is comprised within a set of die packages, and wherein each die package of the set of die packages comprises one or more dies of the plurality of dies.

3. The method of any of claims 1 to 2, wherein detecting the plurality of alignment mark further comprising:
obtaining one or more additional images of the substrate, each additional image of the one or more additional images comprising a respective single alignment mark;
processing the one or more additional images to determine a position and an orientation of the substrate based on each respective single alignment mark; and
generating a model of the substrate based on the position and the orientation of the substrate.

4. The method of claim 3, wherein determining the identity of the alignment mark further comprises:
determining an estimated location of the alignment mark based on the model and a design location of the alignment mark, wherein the design location corresponds to a design file of the substrate; and
narrowing a search field for the alignment mark by generating a modified image of the alignment mark based on the estimated location of the alignment mark, wherein other alignment marks of the plurality of alignment marks are not included in the modified image.

5. The method of claim 4, further comprising aligning, by the at least one processing device, the alignment mark to the model based on the modified image.

6. The method of any of claims 1 to 5, wherein:
determining the identity of the alignment mark further comprises determining, from a plurality of rules, a rule satisfied by the alignment mark; and
each respective alignment mark of the plurality of alignment marks satisfies a respective single rule of the plurality of rules corresponding to a respective identity of the respective alignment mark.

7. The method of claim 6, wherein each rule of the plurality of rules is defined by at least one of: a presence of one or more other alignment marks at one or more first locations relative to the alignment mark, or an absence of one or more other alignment marks at one or more second locations relative to the alignment mark.

8. A system comprising:
a memory; and
at least one processing device, operatively coupled to the memory, to perform operations according to a method of any of claim 1 to 7.

9. A non-transitory computer-readable storage medium comprising instructions that, when executed by at least one processing device, cause the at least one processing device to perform operations of a method of any of claims 1 to 7.
